# EUROPÄISCHE PATENTSCHRIFT

(11) **EP 3 365 652 B1**
(45) Veröffentlichungstag und Bekanntmachung des Hinweises auf die Patenterteilung: **05.04.2023**
(21) Anmeldenummer: 16809629.5
(22) Anmeldetag: 18.10.2016
(51) Int. Cl.: G01M 17/10, B61K 9/08, B61K 9/12

(54) **VORRICHTUNG UND VERFAHREN ZUR KALIBRIERUNG UND/ODER JUSTAGE VON MESSEINRICHTUNGEN FÜR DYNAMISCHE KRÄFTE**
APPARATUS AND METHOD FOR CALIBRATING AND/OR ADJUSTING MEASURING DEVICES FOR DYNAMIC FORCES
DISPOSITIF ET PROCÉDÉ D'ÉTALONNAGE ET/OU DE RÉGLAGE DE DISPOSITIFS DE MESURE DE FORCES DYNAMIQUES

(30) Priorität: 19.10.2015 DE 102015013401
(43) Veröffentlichungstag der Anmeldung: 29.08.2018
(73) Patentinhaber: Schenck Process Europe GmbH, 64293 Darmstadt (DE)
(72) Erfinder: EHMKE, Fritz, 64394 Modautal-Lützelbach (DE); RAIS, Viktor, 64397 Modautal (DE)
(86) Internationale Anmeldenummer: PCT/EP2016/001725
(87) Internationale Veröffentlichungsnummer: WO 2017/067655

(56) Entgegenhaltungen:
- DE-A1- 10 241 320
- DE-A1-102004 012 169
- ES-A2- 2 435 506
- ES-B1- 2 435 506
- US-A- 5 492 002

## Beschreibung

Die Erfindung betrifft eine Vorrichtung zur Kalibrierung und/oder Justage von Messeinrichtungen für dynamische Kräfte gemäß Patentanspruch 1 sowie ein Verfahren zur Kalibrierung und/oder Justage von Messeinrichtungen für dynamische Kräfte gemäß Patentanspruch 12.

Die Räder schienengebundener Fahrzeuge führen beim Überfahren eines Gleises zu einer Schienenbelastung, die sich zusammensetzt aus einem statischen Lastanteil, der im Wesentlichen auf das Fahrzeuggewicht zurückzuführen ist, und einem auf impulsartige Krafteinwirkung zurückzuführenden dynamischen Lastanteil. Die Ursachen für den dynamischen Lastanteil liegen oftmals in bereits anfänglich vorhandenen geometrischen Ungenauigkeiten der Fahrzeugräder wie zum Beispiel Exzentrizität der Räder oder Unrundheiten überdem Radumfang, oder aber in Verschleißerscheinungen wie zum Beispiel Abplattungen oder Flachstellen an der Lauffläche. Weitere Beeinflussungen auf die dynamische Kräfte können auch in einer örtlich fehlerhaften elastischen Bettung des Gleises im Gleistragkörper liegen.

Aufgrund immer höherer Geschwindigkeiten von Schienenfahrzeugen sowie des unmittelbaren Einflusses der Fahrzeuggeschwindigkeit auf den dynamischen Kraftanteil, steigt auch der Verschleiß und die Gefahr von Schäden an Fahrzeugteilen und Gleisanlagen sowie Verschlechterung des Fahrkomforts. Es liegt daher im Interesse der Betreiber und Nutzer von Gleisanlagen, Belastungen aus dem Fahrbetrieb möglichst gering zu halten und mögliche Ursachen für ungewöhnliche Belastungsspitzen frühzeitig zu erkennen und zu beseitigen.

Zur Detektion von Unrundheiten und Flachstellen an Schienenfahrzeugrädern hat sich in der Praxis eine Mess- bzw. Diagnosevorrichtung bewährt, wie sie in der WO 01/17837 A1 beschrieben ist. Dort ist eine Messstrecke beschrieben, deren Schwellen Aussparungen aufweisen, in die Kraftsensoren eingesetzt sind. Die Kraftsensoren tragen einen Schienenabschnitt, so dass bei der Überfahrt der Messstrecke die Radaustandskräfte von den Wägezellen erfasst und an eine Auswerteinheit übermittelt werden. Aus den Abweichungen des in der Auswerteinheit ermittelten Kraftverlaufs von einem Mittelwert oder einem Referenzkraftverlaufs können Rückschlüsse auf Unrundheiten und Flachstellen an Fahrzeugrädern geschlossen werden.

Bei der Fertigung und/oder Montage derartiger Vorrichtungen sowie bei deren Betrieb können Störeinflüsse auf den Messvorgang nicht ausgeschlossen werden. Um aussagekräftige und verlässliche Werte zu erhalten, ist es daher unerlässlich, die Vorrichtungen vor Inbetriebnahme und nachfolgend in regelmäßigen Intervallen zu kalibrieren und/oder zu justieren. Hierfür zur Verfügung stehende Vorrichtungen und Verfahren beschränken sich jedoch darauf, Mess- bzw. Diagnosevorrichtung statisch oder quasistatisch zu kalibrieren und/oder justieren, der Einfluss des dynamischen Kraftanteils bleibt dabei unberücksichtigt.

Die ES 2435506 offenbart eine Vorrichtung zur Kalibrierung und/oder Justage einer Messachse eines Drehgestells eines Schienenfahrzeugs und die US 5492002 offenbart eine Kalibriervorrichtung für einen mit Dehnungsmessstreifen versehenen Laufradsatz.

Vor diesem Hintergrund ist die Aufgabe der Erfindung darin zu sehen, eine präzisere Kalibrierung und/oder Justierung von Messvorrichtungen für dynamische Kräfte und insbesondere von Diagnosevorrichtungen für Schienenfahrzeuge zu erreichen.

Diese Aufgabe wird durch eine Vorrichtung mit den Merkmalen des Patentanspruchs 1 und ein Verfahren mit den Merkmalen des Patentanspruchs 12 gelöst.

Vorteilhafte Weiterbildungen ergeben sich aus den Unteransprüchen.

Der Grundgedanke der Erfindung besteht darin, im Bereich einer Messtrecke auf die dortige Mess- bzw. Diagnosevorrichtung eine definierte und reproduzierbare dynamische Kraft aufzubringen, deren in einem Referenzkraftsaufnehmer erfassten Signale einen Referenzkraftsignalverlauf ergeben, und deren in einem Kraftaufnehmer der Mess- bzw. Diagnosevorrichtung erfassten Signale einen zugehörigen Kraftsignalverlauf ergeben. Ein Vergleich und eine Auswertung von Referenzkraftsignalverlauf und Kraftsignalverlauf ermöglicht eine dynamische Kalibrierung und/oder Justage der Mess- bzw. Diagnosevorrichtung.

Da die Grundlage für eine erfindungsgemäße Kalibrierung und/oder Justage die Beaufschlagung einer Mess- bzw. Diagnosevorrichtung mit einer dynamischen Kraft ist, gelingt es im Vergleich zum Stand der Technik erstmals, den dynamischen Kraftanteil bei der Kalibrierung und/oder Justage mit zu berücksichtigen und somit die tatsächlich auftretenden Kraftzustände wirklichkeitsgetreu abzubilden.

Dabei erweist es sich als Vorteil, dass für die Kalibrierung und/oder Justage der über die Zeit ermittelte Kraftsignalverlauf von Referenzkraftaufnehmer und Kraftaufnehmer der Messvorrichtung zur Verfügung steht. Beim Vergleich des Kraftsignalverlaufs mit dem Referenzkraftsignalverlauf können somit mehrere signifikante Punkte, Kurvenabschnitte oder Kennwerte der Signalverläufe berücksichtigt werden, wie zum Beispiel Maximal- und Minimalwerte, Steigungen, Mittelwerte, Kraftstoßermittlung durch Integralbildung etc., was zu einer höheren Präzision und Sicherheit bei der Kalibrierung und/oder Justage führt.

Bevorzugt ist die Verwendung eines kalibrierten Referenzkraftaufnehmers innerhalb einer erfindungsgemäßen Vorrichtung, so dass die aus dem Referenzkraftaufnehmer gewonnenen Signalverläufe rückführbar sind.

Ferner ist es möglich, den Referenzkraftsignalverlauf durch geeignete Rahmenbedingungen beim Aufbringen der dynamischen Kraft so zu gestalten, dass er dem für die Überfahrt eines schadhaften Fahrzeugrads über die Messstrecke charakteristischen Signalverlauf entspricht. Hierfür geeignete Mittel stellen Federeinheiten oder Aktoren dar, mit denen der dynamische Kraftverlauf gesteuert werden kann. Auf diese Weise liegen der Kalibrierung und/oder Justage realitätsnahe dynamische Kraftzustände zugrunde, was die Präzision und Sicherheit der kalibrierten und/oder justierten Messvorrichtungen weiter verbessert.

Die Auswertung der Kraftsignalverläufe eröffnet ferner die Möglichkeit, eine inhomogene elastische Bettung des Gleises im Bereich der Mess- bzw. Diagnoseeinrichtung zu erkennen. So führt bei zu weicher Bettung des Gleises die dynamische Kraft zu einem schwachen Kraftsignal des Kraftaufnehmers in der Mess- bzw. Diagnosevorrichtung; hingegen erzeugt eine harte Bettung des Gleises ein stärkeres Antwortsignal.

Eine erfindungsgemäße Vorrichtung zeichnet sich zunächst durch ihre hohe Mobilität aus. Diese ist auf einen einfachen und kompakten Aufbau der Vorrichtung sowie die weitgehend autarke Arbeitsweise der Vorrichtung zurückzuführen, gegebenenfalls kombiniert mit der Zerlegbarkeit in einzelne Funktionskomponenten. Die Vorrichtung lässt sich auf diese Weise äußerst eng verstauen, so dass für deren Transport ein handelübliches Kraftfahrzeug problemlos genügt. Damit lassen sich unterschiedliche Einsatzorte schnell und unabhängig erreichen, selbst wenn diese weit abgelegen sein sollten. Für die letzte Distanz zum Einsatzort ist es sogar möglich, die Vorrichtung bzw. deren einzelne Komponenten von Hand zu tragen, wozu bereits eine Person genügt.

Der erfindungsgemäße Aufbau einer erfindungsgemäßen Vorrichtung ermöglicht darüber hinaus deren einfache und schnelle Montage an der zu prüfenden Messvorrichtung bzw. ein zügiges Umsetzen innerhalb der Messtrecke sowie eine rasche Durchführung der Messzyklen. Innerhalb kürzester Zeit ist also die die Einsatzbereitschaft der Vorrichtung erreicht und der Kalibier- und/oder Justiervorgang abgeschlossen, was sich nicht zuletzt im Hinblick auf die für die Messungen notwendigen Streckensperrungen und damit verbundenen Beeinträchtigungen des Bahnverkehrs als großer Vorteil herausstellt.

Zur Umsetzung der Erfindung sehen einfache Ausführungsformen vor, zur Erzeugung eines Kraftstoßes einen Massekörper vorbestimmten Gewichts aus einer definierten Höhe und allein angetrieben durch dessen Gewichtskraft gegen einen starren, mit der Messvorrichtung gekoppelten Anschlag zu führen; der Massekörper erfährt in diesem Fall also eine negative Beschleunigung durch das schlagartige Abbremsen am Anschlag. Die Bewegung des Massekörpers kann quasi im freien Fall entlang von vertikalen Linearführungen erfolgen oder geführt von einem Schwenkarm entlang einer Kreisbahn. In beiden Fällen bedingt der Aufprall einen Kraftstoß, der im Bereich vor der Messvorrichtung den Referenzkraftsignalverlauf erzeugt und im Bereich der zu prüfenden Messvorrichtung den Kraftsignalverlauf, die als Grundlage für die Kalibrierung und/oder Justage dienen. Der Vorteil solcher Ausführungsformen liegt darin, dass ein Antrieb zur Beschleunigung des Massekörpers entbehrlich ist, so dass die Vorrichtung weitestgehend autark betrieben werden kann.

Bei einer anderen Ausführungsform wird der Massekörper aus einer Ruhelage positiv beschleunigt. Dazu wird ein zwischen Messvorrichtung und Massekörper zwischengeschalteter Aktor aktiviert, der sowohl mit dem Massekörper als auch der Messvorrichtung kraftgekoppelt ist. Indem der Aktor den Massekörper beschleunigt, werden aufgrund der Masseträgheit Reaktionskräfte hervorgerufen, die auf die Messvorrichtung einwirken. Dabei erweist es sich als Vorteil, dass der Aktor programmgesteuert einem vorbestimmten Weg-Zeit-Diagramm folgen kann, so dass der Referenzkraftsignalverlauf nach Belieben vorgegeben werden kann.

In diesem Zusammenhang haben sich Linearantriebe wie zum Beispiel Zylinderkolbeneinheiten, Spindeltriebe, pneumatische Antriebe oder Antriebskräfte aus Verbrennungsprozessen als besonders vorteilhaft erwiesen, da deren Kraftrichtung eindeutig definiert ist und vorteilhafterweise mit der tatsächlichen Belastung aus dem Fahrbetrieb in Übereinstimmung gebracht werden kann.

Im Sinne einer erleichterten Handhabung ist der Massekörper nur so schwer, dass er problemlos von Hand getragen werden kann, was bis etwa 25 kg Gewicht ohne weiteres möglich ist. Sollen schwerere Massekörper zum Einsatz kommen, so kann der Massekörper mehrteilig ausgebildet sein, wobei jedes Teil ein bestimmtes Gewicht nicht überschreitet. Am Einsatzort können die Teile dann zum Massekörper zusammengesetzt werden.

Insbesondere bei Ausführungsformen mit Aktoren können auch Massekörper zum Einsatz kommen, die aufgrund ihrer großen Masse nicht mehr manuell zu handhaben sind. So liegt im Rahmen der Erfindung auch der Einsatz eines Schienenfahrzeugs als Massekörper, das das Widerlager für den Aktor bildet. Das hat den Vorteil, dass eine Kalibrierung und/oder Justage unter gleichzeitiger Berücksichtung sowohl statischer als auch dynamischer Lastanteile erfolgt.

In vorteilhafter Weiterbildung der Erfindung ist zwischen der Messeinrichtung und dem Massekörper eine Federeinheit angeordnet, die der aufgebrachten dynamischen Kraft entgegenwirkt und daher den Referenzkraftsignalverlauf beeinflusst. Durch Wahl geeigneter Federkonstanten lassen sich die Referenzkraftsignalverläufe an bestimmte Anforderungen anpassen. So entsteht bei großen Federkonstanten ein Signalverlauf mit großen Amplituden und großen Flankensteigungen, während bei kleinen Federkonstanten ein gemäßigter und ausgeglichener Signalverlauf auftritt.

Vorzugsweise umfasst die Federeinheit mehrere Federelemente wie zum Beispiel Tellerfedern, die in der Federeinheit parallel und/oder in Reihe angeordnet sein können, um die gewünschte Federkonstante der Federeinheit zu erhalten.

Die Erfindung wird nachfolgend anhand mehrerer in den Zeichnungen dargestellter Ausführungsbeispiele erläutert, wobei weitere Merkmale und Vorteile der Erfindung offenbar werden. Zur Erleichterung des Verständnisses werden dabei für gleiche und funktionsgleiche Merkmale unterschiedlicher Ausführungsformen der Erfindung gleichlautende Bezugszeichen verwendet.

Es zeigt jeweils in schematischer Darstellung
- Fig. 1: einen Schnitt durch eine Mess- bzw. Diagnosevorrichtung mit einer ersten Ausführungsform einer erfindungsgemäße Vorrichtung,
- Fig. 2: einen Schnitt durch eine Mess- bzw. Diagnosevorrichtung mit einer zweiten Ausführungsform einer erfindungsgemäße Vorrichtung, und
- Fig. 3: einen Schnitt durch eine Mess- bzw. Diagnosevorrichtung mit einer dritten Ausführungsform einer erfindungsgemäße Vorrichtung.

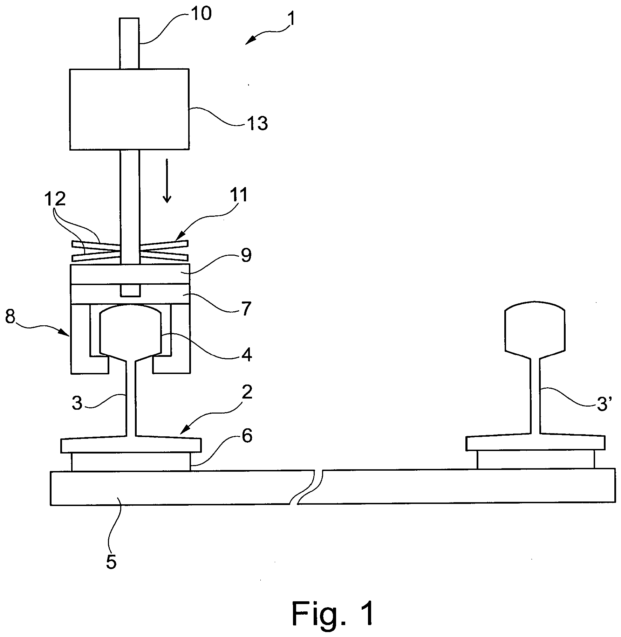

Die Fig. 1 bis 3 zeigen unterschiedliche Ausführungsformen erfindungsgemäßer Vorrichtung 1, 1', 1", die jeweils zur Kalibrierung und/oder Justage einer Mess- bzw. Diagnosevorrichtung 2 bestimmt sind. Die Mess- bzw. Diagnosevorrichtung 2 ist als Teil einer Messtrecke in ein Gleis integriert. Beispielsweise kann die Messstrecke von einer Anzahl in Schienenrichtung aneinander gereihter Messfelder gebildet sein, wobei eine Mess- bzw. Diagnosevorrichtung 2 ein Messfeld verkörpert und sich über einen Schienenabschnitt von zwei Schwellen erstreckt. Die in den Fig. 1 bis 3 wiedergegebenen Schnittdarstellungen entsprechen dabei dem Bereich zwischen zwei Schwellen.

Die Mess- bzw. Diagnosevorrichtungen 2 gemäß der Fig. 1 bis 3 umfassen jeweils eine Messschiene 3, die mit ihrem Schienenkopf 4 eine erfindungsgemäße Vorrichtung 1, 1', 1" tragen. Die Lagerung der Enden einer Messschiene 3 erfolgt dabei jeweils im Bereich einer Schwelle 5, wo sich der Schienenfuß auf einem in der Schwelle 5 gelagerten Kraftaufnehmer 6 abstützt.

Fig. 1 betrifft eine erste Ausführungsform einer erfindungsgemäßen Vorrichtung 1 zur Kalibrierung und/oder Justage der Mess- bzw. Diagnosevorrichtung 2. Die Vorrichtung 1 umfasst ein plattenförmiges Krafteinleitungselement 7, das mit seiner Unterseite mit unmittelbarem Kontakt auf dem Schienenkopf 4 der Messschiene 3 aufliegt. Mit Hilfe einer Halteeinrichtung 8, deren Spannbacken den Schienenkopf 4 an seiner Unterseite hintergreifen, ist das Krafteinleitungselement 7 gegen den Schienenkopf 4 gespannt, was sowohl einen sicheren Sitz der Vorrichtung 1 auf der Mess- bzw. Diagnosevorrichtung 2 als auch eine vollständige Weiterleitung des Kraftstoßes vom Krafteinleitungselement 7 in die Messschiene 3 gewährleistet.

An der Oberseite des Krafteinleitungselements 7 ist wiederum ein Referenzkraftaufnehmer 9 angeordnet, der über Verbindungsmittel starr mit dem Krafteinleitungselement 7 verbunden ist. Von der Oberseite des Referenzkraftaufnehmers 9 ausgehend erstreckt sich in vertikaler Richtung eine Linearführung, die im vorliegenden Ausführungsbeispiel von einer zentralen Führungsstange 10 gebildet ist und die beispielsweise eine Länge in einem Bereich zwischen 50 cm und 100 cm besitzen kann.

Um die Führungsstange 10 lose umgreifend sitzt auf dem Referenzkraftaufnehmer 9 eine in vertikaler Richtung wirksame Federeinheit 11. Ohne sich darauf einzuschränken bilden im vorliegenden Fall zwei in Reihe geschaltete Tellerfedern 12 die Federeinheit 11. Durch geeignete Anzahl, Auswahl und Anordnung der Federelemente kann die Federkonstante der Federeinheit 11 eingestellt werden, zum Beispiel in einem Bereich zwischen 10 kN/mm und 200 kN/mm.

Schließlich sieht man in Fig. 1 noch als wesentliches Element der Erfindung einen Massekörper 13, der innerhalb der Vorrichtung 1 entlang der Führungsstange 10 in beide Richtungen frei gleitend angeordnet ist. Der Massekörper 13, der vorzugsweise aus Stahl hergestellt ist, besitzt vorteilhafterweise eine zylindrische Gestalt mit einer Durchgangsbohrung im Bereich seiner Längsachse, innerhalb der die Führungsstange 10 verläuft.

Zur Kalibrierung und/oder Justage der Mess- bzw. Diagnosevorrichtung 2 wird der Massekörper 13 entlang der Führungsstange 10 auf eine vorbestimmte Fallhöhe angehoben, beispielsweise auf einen Meter, und dann plötzlich freigegeben. Bedingt durch die Gewichtskraft bewegt sich der Massekörper 13 nach unten, trifft zunächst auf die Federeinheit 11, die der Bewegung des Massekörpers 13 entgegen wirkt und schließlich auf den Referenzkraftaufnehmer 9, der den vom Massekörper 13 ausgeübten dynamischen Kraftstoß über die Zeit aufnimmt und an eine nicht weiter dargestellte Auswerteinheit übermittelt. Auf Basis dieser Werte wird ein Referenzkraftsignalverlauf erzeugt.

Gleichzeitig wird der Kraftstoß vom Referenzkraftaufnehmer 9 in das Krafteinleitungselement 7 eingeleitet, das auf diese Weise einen mittelbaren Anschlag für den Massekörper 13 bildet. Über das Krafteinleitungselement 7 wird der Kraftstoß in die Messschiene 3 und im Weiteren in den Kraftaufnehmer 6 der Mess- bzw. Diagnosevorrichtung 2 eingeleitet. Das dort erzeugte Kraftstoßsignal wird ebenfalls an die Auswerteinheit übermittelt und daraus ein Kraftsignalverlauf erzeugt. Zur Kalibrierung und/oder Justage werden die beiden Signalverläufe miteinander verglichen und ausgewertet.

Im Idealfall gleichen sich Referenzkraftsignalverlauf und Kraftsignalverlauf hinsichtlich Amplitude und Kurvenform, was bedeutet, dass die Abweichung gleich Null ist und sich eine Justage erübrigt.

Sind hingegen Differenzen feststellbar, indem sich zum Beispiel die maximalen Amplituden unterscheiden, so ist als Ergebnis der Kalibrierung die Abweichung festzustellen und gegebenenfalls eine Justierung der Mess- bzw. Diagnosevorrichtung 2 um den Betrag der Abweichung vorzunehmen.

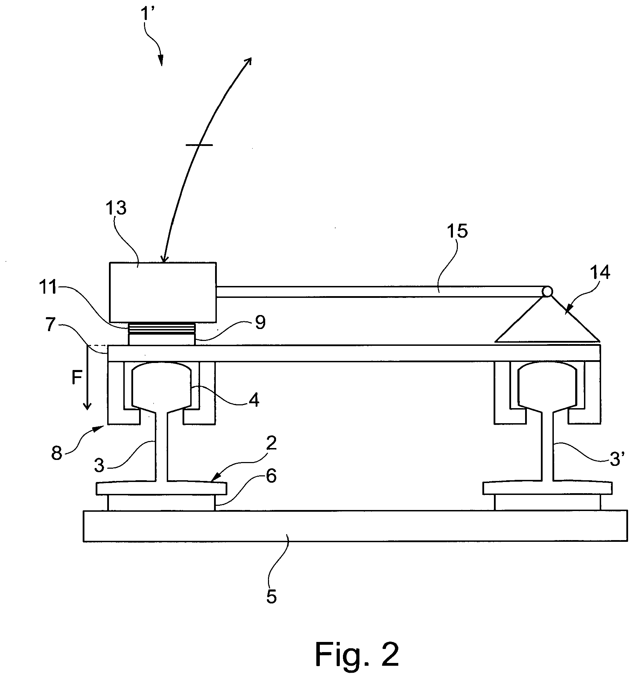

Die erfindungsgemäße Vorrichtung 1' nach Fig. 2 basiert auf dem gleichen vorstehend beschriebenen Funktionsprinzip, nämlich durch schlagartiges Abbremsen eines fallenden Massekörpers an einem Anschlag einen dynamischen Lastfall zu simulieren, allerdings mit zum Teil unterschiedlichen Mitteln. Übereinstimmung mit der unter Fig. 1 beschriebenen Ausführungsform besteht im Hinblick auf die Mess- bzw. Diagnosevorrichtung 2 sowie der Befestigung eines als Anschlag für den Massekörper 13 dienenden Krafteinleitungselements 7 auf der Messschiene 3 mit Hilfe einer Halteeinrichtung 8 sowie den auf dem Krafteinleitungselement 7 angeordneten Referenzkraftaufnehmer 9 und Federeinheit 11, so dass das dort Gesagte gilt.

Unterschiede bestehen in der Art der Führung des Massekörpers 13 hin zum Krafteinleitungselement 7. Bei der Ausführungsform gemäß Fig. 2 ist an der parallel zur Messschiene 3 verlaufenden zweiten Schiene 3' des Gleises ein ortsfestes Schwenklager 14 angeordnet, an dem das eine Ende eines Schwenkarms 15 angelenkt ist. Das andere Ende des Schwenkarms 15 ist starr mit dem Massekörper 13 verbunden.

Zur Erzeugung einer dynamischen Kraft wird der Massekörper 13 soweit erforderlich um das Schwenklager 14 nach oben geschwenkt, beispielsweise bis der Massekörper 13 eine Lage über dem Schwenklager 14 eingenommen hat. Durch Initiieren einer Bewegung in Richtung der Mess- bzw. Diagnosevorrichtung 2 bescheunigt der Massekörper 13 im Weiteren frei auf der durch das Schwenklager 14 und den Schwenkarm 15 vorgegebenen Kreisbahn bis er schließlich mittelbar über Federeinheit 11 und Referenzkraftaufnehmer 6 an dem Krafteinleitungselement 7 anschlägt. Der sich infolge des Kraftstoßes ergebende Referenzkraftsignalverlauf und Kraftsignalverlauf sowie deren Auswertung zur Kalibrierung und gegebenenfalls Justage der Mess- bzw. Diagnosevorrichtung 2 entsprechen dem unter Fig. 1 beschriebenen.

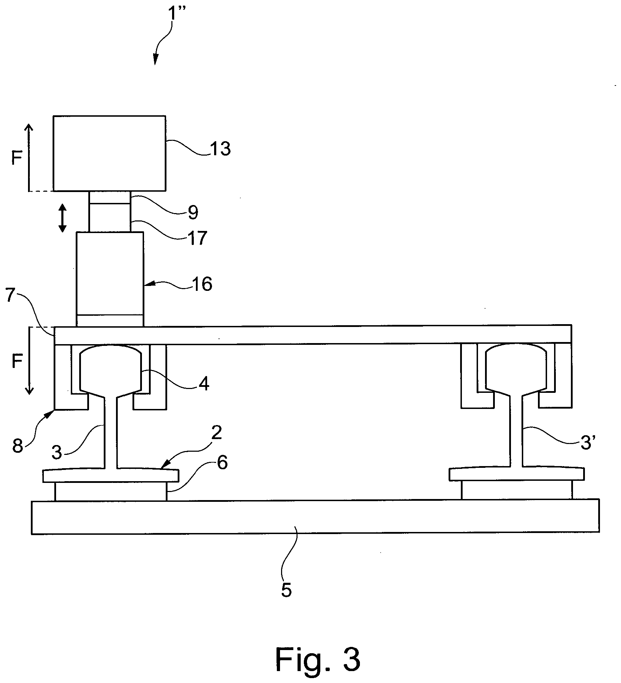

Gegenstand von Fig. 3 Ist eine Ausführungsform der Erfindung, bei der zur Erzeugung einer dynamischen Kraft ein Massekörper 13 aus einer Ruhelage beschleunigt wird und die dabei entstehenden Beschleunigungskräfte bzw. Reaktionskräfte als Kraftstoß genutzt werden. Die Mess- bzw. Diagnosevorrichtung 2 mit gegen die Messschiene 3 gespanntem Krafteinleitungselement 7 entsprechen wiederum den unter den Fig. 1 und 2 beschriebenen.

Gegen das Krafteinleitungselement 7 stützt sich ein Aktor ab, der im vorliegenden Ausführungsbeispiel von einer hydraulisch angetriebenen Zylinderkolbeneinheit 16 gebildet ist, aber ebenso aus einem Spindeltrieb oder pneumatischem Antrieb und dergleichen bestehen könnte. Der verschiebliche Kolben 17 der Zylinderkolbeneinheit 16 ist unter Zwischenschaltung eines Referenzkraftaufnehmers 9 zug- und druckkraftübertragend mit dem Massekörper 13 verbunden.

Durch geeignete Druckbeaufschlagung und damit Ansteuerung der Zylinderkolbeneinheit 16 entstehen im Zuge der Beschleunigung Kräfte, die wie bereits unter den Fig. 1 und 2 beschrieben, im Referenzkraftaufnehmer 9 und Kraftaufnehmer 6 der Mess- bzw. Diagnosevorrichtung 2 erfasst und an eine Auswertvorrichtung weitergeleitet werden. Dabei ist es möglich, nicht nur Druckkräfte auf die Kraftaufnehmer 6, 9 aufzubringen, sondern durch Einfahren des Kolbens 17 in die Zylinderkolbeneinheit 16 auch Zugkräfte, um so beispielsweise eine anfängliche Entlastung der Schiene vor Auftreten der dynamischen Kraft zu simulieren.

### Bezugszeichenliste:

- 1, 1', 1": Vorrichtung zur Kalibrierung und/oder Justage
- 2: Mess- bzw. Diagnosevorrichtung
- 3, 3': Messschiene
- 4: Schienenkopf
- 5: Schwelle
- 6: Kraftaufnehmer
- 7: Krafteinleitungselement
- 8: Halteeinrichtung
- 9: Referenzkraftaufnehmer
- 10: Führungsstange
- 11: Federeinheit
- 12: Tellerfeder
- 13: Massekörper
- 14: Schwenklager
- 15: Schwenkarm
- 16: Zylinderkolbeneinheit
- 17: Kolben

## Patentansprüche

1. Vorrichtung (1, 1',1") zur Kalibrierung und/oder Justage von Messvorrichtungen (2) für dynamische Kräfte, insbesondere zur Kalibrierung und/oder Justage von Diagnosevorrichtungen für Schienenfahrzeuge, wobei die Messvorrichtung (2) eine Messschiene (3) umfasst und als Teil einer Messstrecke in ein Gleis integriert ist, mit
- einem mit der Messvorrichtung (2) fest verbindbaren plattenförmigen Krafteinleitungselement (7), das Teil einer Halteeinrichtung (8) ist, mit der die Vorrichtung (1, 1', 1") gegen die Messvorrichtung (2) spannbar ist, wobei die Halteeinrichtung (8) Spannbacken umfasst, die derart ausgelegt sind, den Schienenkopf (4) der Messschiene (3) an seiner Unterseite zu hintergreifen,
- einem entlang einer Führung relativ zum Krafteinleitungselement (7) bewegbaren Massekörper (13),
- einem zwischen Krafteinleitungselement (7) und Massekörper (13) angeordneten Referenzkraftaufnehmer (9) oder Referenzbeschleunigungssensor,
- Mitteln zur Aufbringung einer positiven oder negativen Beschleunigung auf den Massekörper (13),
- wobei die Reaktionskräfte infolge der Beschleunigung des Massekörpers (13) von den Mitteln in das Krafteinleitungselement (7) und im Weiteren in den Kraftaufnehmer (6) oder Beschleunigungssensor der Messvorrichtung (2) eingeleitet werden, und
- mit einer Auswerteinrichtung zur Erfassung, Verarbeitung und Vergleichsbildung der von dem Referenzkraftaufnehmer (9) oder Referenzbeschleunigungssensor ermittelten Werte und der von dem Kraftaufnehmer (6) oder Beschleunigungssensor der Messvorrichtung (2) ermittelten Werte.

2. Vorrichtung nach Anspruch 1, **dadurch gekennzeichnet, dass** die Mittel zur Aufbringung einer negativen Beschleunigung einen Anschlag umfassen, gegen den der mit vorbestimmter Geschwindigkeit bewegte Massekörper (13) geführt ist.

3. Vorrichtung nach Anspruch 2, **dadurch gekennzeichnet, dass** der Anschlag von dem Krafteinleitungselement (7) gebildet ist.

4. Vorrichtung nach Anspruch 1, **dadurch gekennzeichnet, dass** die Mittel zur Aufbringung einer positiven Beschleunigung einen Aktor umfassen, der zwischen Krafteinleitungselement (7) und Massekörper (13) angeordnet ist und mit dem der Massekörper (13) aus einer Ruhelage beschleunigbar ist.

5. Vorrichtung nach Anspruch 4, **dadurch gekennzeichnet, dass** der Aktor von einem Linearantrieb gebildet ist, vorzugsweise von einer Zylinderkolbeneinheit, einem Spindeltrieb, einem pneumatischen Antrieb oder einem Verbrennungsprozess.

6. Vorrichtung nach Anspruch 4 oder 5, **dadurch gekennzeichnet, dass** der Massekörper (13) von einem Schienenfahrzeug gebildet ist.

7. Vorrichtung nach einem der Ansprüche 1 bis 6, **dadurch gekennzeichnet, dass** der Referenzkraftaufnehmer (6) unmittelbar am Krafteinleitungselement (7) angeordnet ist, so dass die Beschleunigungskraft mittelbar über den Referenzkraftaufnehmer (9) auf das Krafteinleitungselement (7) wirkt, oder dass der Referenzkraftaufnehmer (9) unmittelbar am Massekörper (13) angeordnet ist.

8. Vorrichtung nach einem der Ansprüche 1 bis 7, **dadurch gekennzeichnet, dass** zwischen Krafteinleitungselement (7) und Massekörper (13) eine Federeinheit angeordnet ist, so dass die Beschleunigungskraft mittelbar über die Federeinheit auf das Krafteinleitungselement (7) wirkt.

9. Vorrichtung nach Anspruch 8, **dadurch gekennzeichnet, dass** die Federeinheit unmittelbar am Referenzkraftaufnehmer (9) angeordnet ist, so dass die Beschleunigungskraft mittelbar über die Federeinheit und den Referenzkraftaufnehmer (9) auf das Krafteinleitungselement (7) wirkt.

10. Vorrichtung nach Anspruch 8 oder 9, **dadurch gekennzeichnet, dass** die Federeinheit mindestens ein Federelement umfasst, vorzugsweise in Form einer Tellerfeder (12).

11. Vorrichtung nach einem der Ansprüche 1 bis 10, **dadurch gekennzeichnet, dass** die Führung eine Linearführung (10) oder Schwenkführung (14, 15) ist.

12. Verfahren zur Kalibrierung und/oder Justage von Messvorrichtungen (2) für dynamische Kräfte mittels der Vorrichtung nach Anspruch 1, insbesondere zur Kalibrierung und/oder Justage von Diagnosevorrichtungen für Schienenfahrzeuge, wobei die Messvorrichtung als Teil einer Messstrecke in ein Gleis integriert ist, mit folgenden Verfahrensschritten:
a. Montage der Vorrichtung zur Justage - oder Kalibrierung nach Anspruch 1 an der im Gleis integrierten Messvorrichtung (2)
b. Einleiten einer dynamischen Kraft in die Messvorrichtung (2),
c. Erfassen eines Referenzkraftsignalverlaufs infolge der dynamischen Kraft mittels eines Referenzkraftaufnehmers (9) oder Referenzbeschleunigungssensors,
d. Erfassen eines Kraftsignalverlaufs infolge der dynamischen Kraft durch die Messvorrichtung (2),
e. Auswerten der unter den Schritten c. und d. erfassten Signalverläufe durch Vergleichsbildung.

## Claims

1. Apparatus (1, 1', 1") for calibrating and / or adjusting measuring apparatuses (2) for dynamic forces, in particular for calibrating and / or adjusting diagnostic apparatuses for rail vehicles, the measuring apparatus comprising a measuring rail (3) and being integrated in a rail as part of a measuring section, having
- a plate-shaped force application element (7) which is fixedly connectable with the measuring apparatus (2) and is part of a holding device with which the apparatus (1, 1', 1") can be tensioned against the measuring apparatus (2), the holding device (8) comprising clamping jaws that are designed to engage behind the rail head (4) of the measuring rail (3) on its bottom side,
- a mass body (13) which is movable along a guide, relative to the force application element (7),
- a reference force transducer (9) or reference acceleration sensor arranged between the force application element (7) and the mass body (13),
- means for applying a positive or negative acceleration to the mass body (13),
- wherein due to the acceleration of the mass body (13), the reaction forces are introduced into the force application element (7) and, additionally, into the force transducer (6) or acceleration sensor of the measuring apparatus (2) by the means, and
- with an analysis device for recording, processing and comparison of the values determined by the reference force transducer (9) or reference acceleration sensor, and by the force transducer (6) or acceleration sensor of the measuring apparatus (2).

2. Apparatus according to claim 1, **characterized in that** the means for applying a negative acceleration comprise a stop against which the mass body (13), which is moved at a predetermined speed, is guided.

3. Apparatus according to claim 2, **characterized in that** the stop is embodied by the force application element (7).

4. Apparatus according to claim 1, **characterized in that** the means for applying a positive acceleration comprise an actuator, which is arranged between the force application element (7) and the mass body (13), and with which the mass body (13) can be accelerated from a rest position.

5. Apparatus according to claim 4, **characterized in that** the actuator is embodied by a linear drive, preferably by a cylinder piston unit, a spindle drive, a pneumatic drive or a combustion process.

6. Apparatus according to claim 4 or 5, **characterized in that** the mass body (13) is embodied by a rail vehicle.

7. Apparatus according to any one of claims 1 to 6, **characterized in that** the reference force transducer (6) is directly arranged on the force application element (7), so that the acceleration force indirectly acts via the reference force transducer (9) on the force application element (7), or that the reference force transducer (9) is arranged directly on the mass body (13).

8. Apparatus according to any one of claims 1 to 7, **characterized in that** a spring unit is arranged between the force application element (7) and the mass body (13), so that the acceleration force indirectly acts on the force application element (7) via the spring unit.

9. Apparatus according to claim 8, **characterized in that** the spring unit is arranged directly on the reference force transducer (9), so that the acceleration force indirectly acts on the force application element (7) via the spring unit and the reference force transducer (9).

10. Apparatus according to claim 8 or 9, **characterized in that** the spring unit comprises at least one spring element, preferably in the form of a disk spring (12).

11. Apparatus according to any one of claims 1 to 10, **characterized in that** the guide is a linear guide (10) or a pivot guide (14, 15).

12. Method for calibrating and / or adjusting measuring apparatuses (2) for dynamic forces by means of the apparatus according to claim 1, in particular for calibrating and / or adjusting diagnostic apparatuses for rail vehicles, the measuring apparatus being integrated in a rail as part of a measuring section, having the following method steps:
a. Mounting the adjusting or calibrating apparatus according to claim 1 on the measuring apparatus (2) integrated in the rail,
b. Introducing a dynamic force in the measuring apparatus (2),
c. Recording a reference force signal curve as a result of the dynamic force by means of a reference force transducer (9) or a reference acceleration sensor,
d. Recording a force signal curve as a result of the dynamic force by means of the measuring apparatus (2),
e. Analyzing the signal curves recorded in steps b. and c. by carrying out a comparison.

## Revendications

1. Dispositif (1, 1', 1") pour l'étalonnage et/ou l'ajustement de dispositifs de mesure (2) pour des forces dynamiques, plus particulièrement pour l'étalonnage et/ou l'ajustement de dispositifs de diagnostic pour des véhicules ferroviaires, dans lequel le dispositif de mesure (2) comprend un rail de mesure (3) et est intégré dans une voie en tant que partie d'un tronçon de mesure, avec
- un élément de transmission de force (7) en forme de plaque pouvant être relié de manière fixe avec le dispositif de mesure (2), qui fait partie d'un dispositif de maintien (8) avec lequel le dispositif (1, 1', 1") peut être serré contre le dispositif de mesure (2), dans lequel le dispositif de maintien (8) comprend des mâchoires de serrage qui sont conçues de façon à s'accrocher à l'arrière de la tête de rail (4) du rail de mesure (3) au niveau de son côté inférieur,
- un corps de masse (13) mobile le long d'un guidage par rapport à l'élément de transmission de force (7),
- un capteur de force de référence (9) disposé entre l'élément de transmission de force (7) et le corps de masse (13),
- des moyens pour l'application d'une accélération positive ou négative au corps de masse (13),
- dans lequel les forces de réaction sont transmises, à la suite de l'accélération du corps de masse (13), par les moyens dans l'élément de transmission de force (7) puis dans le capteur de force (6) ou le capteur d'accélération du dispositif de mesure (2) et
- avec un dispositif d'analyse pour la mesure, le traitement et la comparaison des valeurs déterminées par le capteur de force de référence (9) ou le capteur d'accélération de référence et des valeurs déterminées par le capteur de force (6) ou le capteur d'accélération du dispositif de mesure (2).

2. Dispositif selon la revendication 1, **caractérisé en ce que** les moyens d'application d'une accélération négative comprennent une butée contre laquelle le corps de masse (13) déplacée à une vitesse prédéterminée est guidé.

3. Dispositif selon la revendication 2, **caractérisé en ce que** la butée est constituée de l'élément de transmission de force (7).

4. Dispositif selon la revendication 1, **caractérisé en ce que** les moyens d'application d'une accélération positive comprennent un actionneur qui est disposé entre l'élément de transmission de force (7) et le corps de masse (13) et avec lequel le corps de masse (13) peut être accéléré à partir d'une position de repos.

5. Dispositif selon la revendication 4, **caractérisé en ce que** l'actionneur est constitué d'un entraînement linéaire, de préférence d'une unité cylindre-piston, d'un mécanisme à vis, d'un entraînement pneumatique ou d'un processus de combustion.

6. Dispositif selon la revendication 4 ou 5, **caractérisé en ce que** le corps de masse (13) est constitué d'un véhicule ferroviaire.

7. Dispositif selon l'une des revendications 1 à 6, **caractérisé en ce que** le capteur de force de référence (6) est disposé directement sur l'élément de transmission de force (7) de façon à ce que la force d'accélération agisse indirectement sur l'élément de transmission de force (7) par l'intermédiaire du capteur de force de référence (9), ou **en ce que** le capteur de force de référence (9) est disposé directement sur le corps de masse (13).

8. Dispositif selon l'une des revendications 1 à 7, **caractérisé en ce que**, entre l'élément de transmission de force (7) et le corps de masse (13), est disposée une unité de ressort, de façon à ce que la force d'accélération agisse indirectement sur l'élément de transmission de force (7) par l'intermédiaire de l'unité de ressort.

9. Dispositif selon la revendication 8, **caractérisé en ce que** l'unité de ressort est disposée directement sur le capteur de force de référence (9), de façon à ce que la force d'accélération agisse indirectement sur l'élément de transmission de force (7) par l'intermédiaire de l'unité de ressort et du capteur de force de référence (9).

10. Dispositif selon la revendication 8 ou 9, **caractérisé en ce que** l'unité de ressort comprend au moins un élément de ressort, de préférence sous la forme d'une rondelle-ressort (12).

11. Dispositif selon l'une des revendications 1 à 10, **caractérisé en ce que** le guidage est un guidage linéaire (10) ou un guidage pivotant (14, 15).

12. Procédé d'étalonnage et/ou d'ajustement de dispositifs de mesure (2) pour des forces dynamiques au moyen du dispositif selon la revendication 1, plus particulièrement pour l'étalonnage et/ou l'ajustement de dispositifs de diagnostic pour des véhicules ferroviaires, dans lequel le dispositif de mesure est intégré dans une voie en tant que partie d'un tronçon de mesure, avec les étapes suivantes :
a. montage du dispositif d'ajustement ou d'étalonnage selon la revendication 1 sur le dispositif de mesure (2) intégré dans la voie,
b. transmission d'une force dynamique au dispositif de mesure (2),
c. mesure d'un tracé de signal de référence suite à la force dynamique au moyen d'un capteur de force de référence (9) ou
d. mesure d'un tracé de signal de force suite à la force dynamique par le dispositif de mesure (2),
e. analyse des tracés de signaux mesurés aux étapes c. et d. à l'aide d'une comparaison.
